# EUROPEAN PATENT APPLICATION

(11) **EP 4 462 887 A1**
(43) Date of publication of application: **13.11.2024**
(21) Application number: 22917870.2
(22) Date of filing: 07.01.2022
(51) Int. Cl.: H04W 52/02

(54) **MEASUREMENT RELAXATION METHOD AND DEVICE/STORAGE MEDIUM/APPARATUS**

(71) Applicant: Beijing Xiaomi Mobile Software Co., Ltd., Beijing 100085 (CN)
(72) Inventor: HU, Ziquan, Beijing 100085 (CN); LI, Yanhua, Beijing 100085 (CN)
(74) Representative: Stöckeler, Ferdinand
(86) International application number: PCT/CN2022/070854
(87) International publication number: WO 2023/130398

(57) **Abstract**

Provided in the present invention are a measurement relaxation method and a device/storage medium/apparatus, which are applied to the technical field of communications. The method includes: acquiring at least one relaxation criterion of a first version, which is configured by a network-side device; and in response to a UE meeting one or more of the at least one relaxation criterion of the first version, executing a measurement relaxation operation. Therefore, by means of the measurement relaxation method for a first version provided in the embodiments of the present invention, a UE may execute corresponding measurement relaxation on the basis of a relaxation criterion of the first version, which is configured by a network-side device, such that the power consumption is reduced.

## Description

### FIELD

The present invention relates to the field of communication technologies, and in particular to a measurement relaxation method and apparatus/storage medium/device.

### BACKGROUND

In Release-17, based on low mobility of a reduced capability user equipment (Redcap UE), the redcap UE is configured with a relaxation criterion for stationary users and a relaxation criterion for not-at-cell-edge stationary users. However, there is still an urgent problem to be solved in performing measurement relaxation with the configured relaxation criterion.

### SUMMARY

Measurement relaxation method and equipment/storage medium/apparatus are provided in the present invention to provide a method for a UE to perform measurement relaxation by using a relaxation criterion configured by a network device.

According to an aspect of the present invention, there is provided a measurement relaxation method, performed by a UE, including: obtaining at least one relaxation criterion of a first version configured by a network device; and performing a measurement relaxation operation in response to the UE meeting one or more relaxation criteria of the at least one relaxation criterion of the first version.

According to another aspect of the present invention, there is provided a measurement relaxation method, performed by a network device, including: configuring at least one relaxation criterion of a first version for a user equipment (UE).

According to an aspect of the present invention, there is provided measurement relaxation apparatus, including: an obtaining module, configured to obtain at least one relaxation criterion of a first version configured by a network device; and a processing module, configured to perform a measurement relaxation operation in response to a user equipment (UE) meeting one or more relaxation criteria of the at least one relaxation criterion of the first version.

According to another aspect of the present invention, there is provided measurement relaxation apparatus, including: a configuring module, configured to configure at least one relaxation criterion of a first version for a user equipment (UE).

According to a further aspect of the present invention, there is provided a communication device, including: a processor, and a memory having stored therein a computer program that, when executed by the processor, causes the device to implement the method of embodiments of the aspect as described above.

According to a further aspect of the present invention, there is provided a communication device, including: a processor, and a memory having stored therein a computer program that, when executed by the processor, causes the device to implement the method of embodiments of the other aspect as described above.

According to a further aspect of the present invention, there is provided a communication device, including: a processor and an interface circuit. The interface circuit is configured to receive code instructions and transmit the code instructions to the processor. The processor is configured to run the code instructions to implement the method of embodiments of the aspect as described above.

According to a further aspect of the present invention, there is provided a communication device, including: a processor and an interface circuit. The interface circuit is configured to receive code instructions and transmit the code instructions to the processor. The processor is configured to run the code instructions to implement the method of embodiments of the other aspect as described above.

According to a further aspect of the present invention, there is provided a computer-readable storage medium having stored therein instructions that, when executed, cause the method of embodiments of the aspect as described above to be implemented.

According to a further aspect of the present invention, there is provided a computer-readable storage medium having stored therein instructions that, when executed, cause the method of embodiments of the other aspect as described above to be implemented.

Therefore, with the measurement relaxation method and apparatus/storage medium/device provided in the embodiments of the present invention, the UE can obtain at least one relaxation criterion of the first version configured by the network device, and perform the measurement relaxation operation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

Additional aspects and advantages of embodiments of the present invention will be given in part in the following descriptions, become apparent in part from the following descriptions, or be learned from the practice of the embodiments of the present invention.

### BRIEF DESCRIPTION OF THE DRAWINGS

The above and/or additional aspects and advantages of the present invention will become apparent and more readily appreciated from the following descriptions made with reference to the drawings, in which:
FIG. 1 is a flowchart of a measurement relaxation method provided by an embodiment of the present invention;
FIG. 2A is a flowchart of a measurement relaxation method provided by another embodiment of the present invention;
FIG. 2B is a schematic diagram of a cell provided by an embodiment of the present invention;
FIG. 3 is a flowchart of a measurement relaxation method provided by a still another embodiment of the present invention;
FIG. 4 is a flowchart of a measurement relaxation method provided by a further embodiment of the present invention;
FIG. 5 is a flowchart of a measurement relaxation method provided by a further embodiment of the present invention;
FIG. 6 is a flowchart of a measurement relaxation method provided by a further embodiment of the present invention;
FIG. 7 is a flowchart of a measurement relaxation method provided by a further embodiment of the present invention;
FIG. 8 is a flowchart of a measurement relaxation method provided by a further embodiment of the present invention;
FIG. 9 is a flowchart of a measurement relaxation method provided by a further embodiment of the present invention;
FIG. 10 is a flowchart of a measurement relaxation method provided by a further embodiment of the present invention;
FIG. 11 is a flowchart of a measurement relaxation method provided by a further embodiment of the present invention;
FIG. 12 is a schematic diagram of a measurement relaxation apparatus provided by an embodiment of the present invention;
FIG. 13 is a schematic diagram of a measurement relaxation apparatus provided by another embodiment of the present invention;
FIG. 14 is a block diagram of a user equipment provided by an embodiment of the present invention; and
FIG. 15 is a block diagram of a base station provided by an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all possible implementations consistent with embodiments of the present invention. They are merely examples of devices and methods consistent with some aspects of embodiments of the present invention as recited in the appended claims.

Terms used herein in the embodiments of the present invention are for the purpose of describing specific embodiments, but should not be construed to limit the embodiments of the present invention. As used in embodiments of the present invention and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. As used herein, the term "if' may be construed to mean "when" or "upon" or "in response to determining" depending on the context.

Embodiments of the present invention are described in detail below, examples of which are illustrated in the accompanying drawings, where similar or same reference numerals refer to similar or same elements. The embodiments described below with reference to the drawings are illustrative and intended to explain the present invention, and should not be construed as limiting the present invention.

The measurement relaxation method and apparatus/storage medium/device provided by the present invention will be described in detail below with reference to the accompanying drawings.

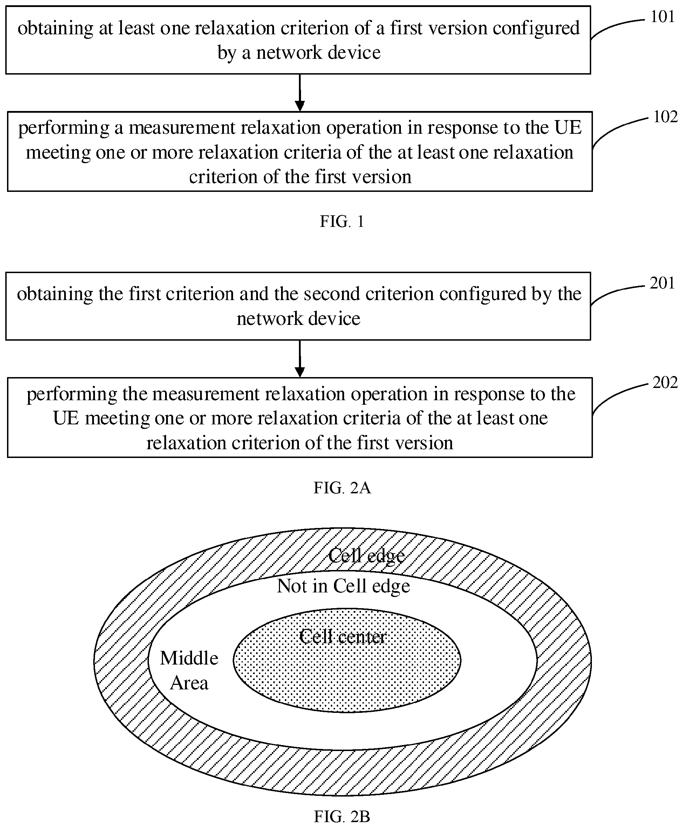

FIG. 1 is a flowchart of a measurement relaxation method provided by an embodiment of the present invention, which is performed by a UE. As shown in FIG. 1, the measurement relaxation method may include the following steps.

In block 101, at least one relaxation criterion of a first version configured by a network device is obtained.

It should be noted that, in embodiments of the present invention, the UE may be a device that provides voice and/or data connectivity to a user. The UE may communicate with one or more core networks via a radio access network (RAN). The UE may be an Internet of Things terminal, such as a sensor device, a mobile phone (or referred to as a "cellular" phone) and a computer with an Internet of Things terminal. For example, it may be a fixed, portable, pocket-sized, handheld, built-in computer or vehicle-mounted apparatus, for example, a station (STA), a subscriber unit, a subscriber station, a mobile station, a mobile, a remote station, an access point, a remote terminal, an access terminal, a user terminal, or a user agent. Alternatively, the UE may be a device of an unmanned aerial vehicle. Alternatively, the UE may be a vehicle-mounted device, for example, a driving computer with a wireless communication function, or a wireless communication device externally connected with a driving computer. Alternatively, the UE may be a roadside device, such as a street lamp, a signal lamp or other roadside devices with a wireless communication function.

In an embodiment of the present invention, the aforementioned UE may be a Redcap UE.

In an embodiment of the present invention, the above-mentioned first version may be Release-17.

Further, in an embodiment of the present invention, the at least one relaxation criterion of the first version includes at least one of the following: a first criterion, i.e., a criterion for a UE to detect stationary mobility (for example, stationaryMobilityEvaluation); a second criterion, i.e., a criterion for a UE to detect that it is not at cell edge while stationary (for example, cellEdgeEvaluationWhileStationary).

In block 102, a measurement relaxation operation is performed in response to the UE meeting one or more relaxation criteria of the at least one relaxation criterion of the first version.

In an embodiment of the present invention, whether the UE meets the relaxation criterion of the first version is determined by determining whether the UE meets a condition of "stationary" and/or a condition of "not-at-cell-edge". Specifically, in an embodiment of the present invention, if the UE meets the "stationary" condition, it is determined that the UE meets the first criterion; if the UE meets both the "stationary" condition and the "not-at-cell-edge" condition, it is determined that the UE meets the second criterion.

In an embodiment of the present invention, a method for determining whether the UE meets the "stationary" condition as described above is as follows. When it is determined that a signal strength received by the UE has reduced, determining in a first preset time period (T_{SearchDeltaP-Stationary}) whether a difference between a preset received signal strength reference value Srxlev_{Ref} (in dB) of the current serving cell and an actual received signal strength Srxlev (in dB) of the UE in the current serving cell is less than a first preset threshold value S_{SearchDeltaP-Stationary}. If (Srxlev_{Ref}-Srxlev) is always less than S_{SearchDeltaP-Stationary} within the first preset time period, it is determined that the current signal amplitude of the UE does not change much, that is, the UE is approximately in a stationary state, thus determining that the UE meets the criterion for a UE to detect stationary mobility. Otherwise, it is determined that the UE does not meet the criterion for a UE to detect stationary mobility.

It should be noted that, in an embodiment of the present invention, the above-mentioned reference value Srxlev_{Ref} may be preset to the serving cell, and a setting conditions of the reference value Srxlev_{Ref} may include at least one of the following: (1) the UE selects or reselects a new cell, that is, when the UE reselects a new cell, a corresponding reference value Srxlev_{Ref} is set for the newly selected serving cell; (2) (Srxlev-Srxlev_{Ref} > 0), that is, the reference value Srxlev_{Ref} set for the serving cell should be smaller than the actual received signal strength Srxlev of the UE in the current serving cell; (3) the determining condition (Srxlev_{Ref}-Srxlev < S_{SearchDeltaP-Stationary}) is not fulfilled in T_{SearchDeltaP-Stationary}, that is, when it is determined that (Srxlev_{Ref}-Srxlev) is not less than S_{SearchDeltaP-Stationary} in T_{SearchDeltaP-Stationary}, Srxlev_{Ref} is reset.

In an embodiment of the present invention, a method for determining whether the UE meets the "not-at-cell-edge" condition as described above is as follows. It is determined whether the current Srxlev of the UE is greater than a second threshold S_{searchThresholdP2}. If Srxlev > S_{searchThresholdP2}, it is determined that the UE is not at the cell edge, and it is determined that the UE meets the "not-at-cell-edge" criterion; otherwise, it is determined that the UE does not meet the "not-at-cell-edge" criterion. It should be noted that, in an embodiment of the present invention, a third preset threshold value S_{searchThresholdQ2} is further configured. In a case where S_{searchThresholdQ2} is configured, when determining whether the UE meets the "not-at-cell-edge" condition, it needs to determine whether the current Srxlev of the UE is greater than S_{searchThresholdP2}, and determine whether the actual received signal quality Squal of the UE in the current serving cell is greater than the third preset threshold value S_{searchThresholdQ2}. If Srxlev > S_{searchThresholdP2} and Squal > S_{searchThresholdQ2}, the UE is determined as not at the cell edge, it is determined that the UE meets the not-at-cell-edge criterion; otherwise, it is determined that the UE does not meet the not-at-cell-edge criterion.

It should be noted that, in an embodiment of the present invention, the above-mentioned first preset time period, the first preset threshold value to the third preset threshold value may be provided by the base station, and the above-mentioned determination conditions (such as determining whether (Srxlev_{Ref}-Srxlev) is smaller than S_{SearchDeltaP} to determine whether the UE meets the stationary condition) may be stipulated by protocols.

Further, in an embodiment of the present invention, the above measurement relaxation operation may include at least one of the following: stopping measurement for a preset duration (for example, the measurement can be stopped within the preset duration); relaxing a measurement interval with an expansion coefficient.

In an embodiment of the present invention, the above-mentioned expansion coefficient may specifically be a real number greater than 1, and relaxing the measurement interval with the expansion coefficient may specifically include: multiplying a measurement period of a normal measurement by the expansion coefficient to obtain a product as a measurement period of a relaxed measurement. In this way, relaxing the measurement interval is achieved.

In an embodiment of the present invention, when the UE meets different relaxation criteria of the first version, corresponding measurement relaxation operations are performed differently, which will be described in detail in subsequent embodiments.

Therefore, with the measurement relaxation method and apparatus/storage medium/device provided in the embodiments of the present invention, the UE can obtain at least one relaxation criterion of the first version configured by the network device, and perform the measurement relaxation operation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

It should be noted that, in an embodiment of the present invention, implementation of the measurement relaxation method provided in the embodiments may be related to area information of an area of the current serving cell where the UE is located (such as a cell center area, a non-cell center area), frequency domain information between the cell to be measured and the current serving cell (such as intra-frequency or inter-frequency), and priority information between the cell to be measured and the current serving cell (such as equal priority, low priority or high priority). For different area information, frequency domain information or priority information, specific implementation steps of the measurement relaxation method may be different. Measurement relaxation methods corresponding to different situations with respect to the area information, the frequency domain information, and the priority information will be described in detail as follows.

FIG. 2A is a flowchart of a measurement relaxation method provided by another embodiment of the present invention, and the method is performed by the UE.

In the embodiment corresponding to FIG. 2, the UE may be located in a non-cell-center area, and a cell to be measured corresponding to the UE is at least one of the following: an intra-frequency cell of a cell where the UE is located; an equal priority inter-frequency cell of the cell where the UE is located; a low priority inter-frequency cell of the cell where the UE is located. As shown in FIG. 2, the measurement relaxation method may include the following steps.

In block 201, the first criterion and the second criterion configured by the network device are obtained.

That is, in this embodiment, the network device configures both the first criterion and the second criterion for the UE.

In block 202, the measurement relaxation operation is performed in response to the UE meeting one or more relaxation criteria of the at least one relaxation criterion of the first version.

In an embodiment of the present invention, when the relaxation criteria satisfied by the UE are different, the measurement relaxation operations performed will be different.

Specifically, it can be seen from the above content that in an embodiment of the present invention, the first criterion is the "criterion for a UE to detect stationary mobility", and the second criterion is the "criterion for a UE to detect that it is not at cell edge while stationary". It can be determined that the second criterion is the first criterion added with "not-at-cell-edge" restriction. On this basis, if the UE meets the second criterion or the UE meets the first criterion and the second criterion, it means that the UE meets both the "stationary" condition and the "not-at-cell-edge" condition, and the measurement relaxation operation may be directly performed on the UE. If the UE meets the first criterion, it means that the UE currently meets the "stationary" condition, not the "not-at-cell-edge" condition. At this time, the measurement relaxation operation cannot be directly performed on the UE, whether to perform the measurement relaxation operation for the UE needs to be determined according to the configuration of the network device.

In an embodiment of the present invention, the network device may send a first indication message to the UE to configure "whether to perform the measurement relaxation operation for the UE in a case where the UE is configured with the first criterion and the second criterion and the UE meets the first criterion". Specifically, in an embodiment of the present invention, the first indication message is used to indicate whether the UE performs the measurement relaxation operation in the case where the UE is configured with the first criterion and the second criterion and the UE meets the first criterion. In an embodiment of the present invention, the first indication message may include a first bearer field, and the first bearer field is used to carry a first indication value. When the first indication value is a first value, the first indication message is used to indicate that the UE is instructed to perform the measurement relaxation operation in the case where the UE is configured with the first criterion and the second criterion and the UE meets the first criterion. When the first indication value is a second value, the first indication message is used to indicate that the UE is instructed to not perform the measurement relaxation operation according to the relaxation criterion of the first version in the case where the UE is configured with the first criterion and the second criterion and the UE meets the first criterion.

In an embodiment of the present invention, the above-mentioned first indication message may be, for example, a radio resource control (RRC) message, the above-mentioned first bearer field may be, for example, IE combineRelaxedMeasCondition-17, and the above-mentioned first value is, for example, false, and the second value may be, for example, true. In addition, it should be noted that in an embodiment of the present invention, combineRelaxedMeasCondition-17 may reuse IE combineRelaxedMeasCondition of a second version, where the second version is earlier than the first version, and the second version may be, for example, Release-15 and/or Release-16.

On this basis, in an embodiment of the present invention, performing the measurement relaxation operation in response to the UE meeting one or more relaxation criteria of the at least one relaxation criterion of the first version may specifically include: performing, by the UE, a first measurement relaxation operation of stopping the measurement for a first preset duration in response to the UE meeting the first criterion and the second criterion. The first preset duration may be, for example, X1 hours (X1>1).

In response to the UE meeting the first criterion, it is determined whether the UE has received the first indication message sent by the network device, and it is determined whether the UE meets a first preset condition or a second preset condition. When the UE meets the first preset condition, the UE performs a second measurement relaxation operation: relaxing the measurement interval with an expansion coefficient K1 (K1>3); and/or, stopping the measurement for a second preset duration, where the second preset duration may be for example X2 h (X2 ≤ X1). When the UE meets the second preset condition, the UE does not perform the measurement relaxation operation according to the relaxation criterion of the first version. It should be noted that, in an embodiment of the present invention, after the UE determines not to perform the measurement relaxation according to the relaxation criterion of the first version, the UE may further determine whether it is configured with the relaxation criterion of the second version. If the UE is not configured with the relaxation criterion of the second version, the measurement relaxation operation may not be performed; if the UE is configured with the relaxation criterion of the second version, and the UE meets the relaxation criterion of the second version, the UE may follow the relaxation criterion of the second version to perform the measurement relaxation operation; if the UE is configured with the relaxation criterion of the second version, but the UE does not meet the relaxation criterion of the second version, the measurement relaxation operation may not be performed (the contents here are also applicable to sections of "not performing the measurement relaxation operation according to the relaxation criterion of the first version" described in the following embodiments).

In an embodiment of the present invention, the first preset condition may include at least one of the following: the first indication message being not received by the UE; the first indication message being received by the UE, where the first indication message includes a first bearer field, and a first indication value carried by the first bearer field is a first value.

The above-mentioned second preset condition may include: the first indication message being received by the UE, where the first indication message includes the first bearer field, and the first indication value carried by the first bearer field is a second value.

For example, in an embodiment of the present invention, it is assumed that the network device configures the first criterion and the second criterion for the UE, and the UE meets the first criterion. At this time, if it is determined that the UE receives the first indication message, the first indication message includes the first bearer field, and the first indication value carried by the first bearer field is the second value, then it is determined that the measurement relaxation operation is not performed according to the relaxation criterion of the first version; if it is determined that the UE has not received the first indication message, then it is determined to relax the measurement interval with an expansion coefficient of 4.

In addition, it should be noted that, in an embodiment of the present invention, FIG. 2B is a schematic diagram of a cell provided by the embodiments of the present invention. As shown in FIG. 2B, the cell includes a cell edge, a middle area, and a cell center, where the edge and the middle area are both ring areas, and the cell center is an ellipse area. Further, a non-center area includes the cell edge and the middle area, and the non-edge area (not in cell edge) includes the middle area and the cell center. On this basis, in an embodiment of the present invention, if the UE is located in the non-center area and the UE meets the second criterion (i.e., the criterion for a UE to detect that it is not at cell edge while stationary), it is determined that the UE is not located at the cell center and not located in the cell edge, but in the middle area between the center and the edge.

Therefore, with the measurement relaxation method and apparatus/storage medium/device provided in the embodiments of the present invention, the UE can obtain the at least one relaxation criterion of the first version configured by the network device, and perform the measurement relaxation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

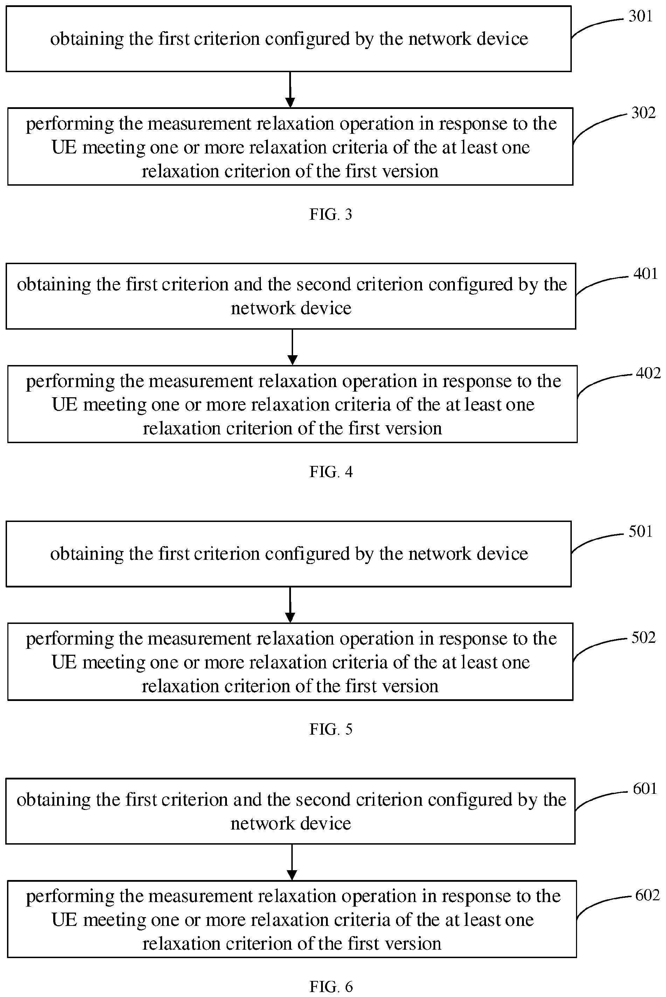

FIG. 3 is a flowchart of a measurement relaxation method provided by a still another embodiment of the present invention. The method is performed by the UE, which may be located in the non-cell-center area, and a cell to be measured corresponding to the UE is at least one of the following: an intra-frequency cell of a cell where the UE is located; an equal priority inter-frequency cell of the cell where the UE is located; a low priority inter-frequency cell of the cell where the UE is located. As shown in FIG. 3, the measurement relaxation method may include the following steps.

In block 301, the first criterion configured by the network device is obtained.

That is, in this embodiment, the network device configures the first criterion for the UE.

In block 302, the measurement relaxation operation is performed in response to the UE meeting one or more relaxation criteria of the at least one relaxation criterion of the first version.

In an embodiment of the present invention, the UE performs the second measurement relaxation operation in response to the UE meeting the first criterion.

In an embodiment of the present invention, the second measurement relaxation operation includes: relaxing the measurement interval with the expansion coefficient K1 (K1>3); and/or, stopping the measurement for the second preset duration, where the second preset duration may be for example X2 h (X2 ≤ X1).

Therefore, with the measurement relaxation method and apparatus/storage medium/device provided in the embodiments of the present invention, the UE can obtain the at least one relaxation criterion of the first version configured by the network device, and perform the measurement relaxation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

Based on the above contents, it can be known that for the case "the UE is located in the non-cell-center area, and a cell to be measured is at least one of the following: the intra-frequency cell of the cell where the UE is located, the equal priority inter-frequency cell of the cell where the UE is located, the low priority inter-frequency cell of the cell where the UE is located", the embodiments of the present invention provide a specific measurement relaxation method.

It should be noted that, in an embodiment of the present invention, when performing the measurement relaxation operation, relaxation levels of the measurement relaxation operations performed for the cells to be measured, i.e., the intra-frequency cell of the cell where the UE is located, the equal priority inter-frequency cell of the cell where the UE is located, and the low priority inter-frequency cell of the cell where the UE is located, are the same (for example, stopping the measurement for the same duration and/or using the same expansion coefficient).

FIG. 4 is a flowchart of a measurement relaxation method provided by a further embodiment of the present invention. The method is performed by the UE. When the UE is located in the non-cell-center area, and a cell to be measured is a high priority inter-frequency cell. As shown in FIG. 4, the measurement relaxation method may include the following steps.

In block 401, the first criterion and the second criterion configured by the network device are obtained.

That is, in this embodiment, the network device configures both the first criterion and the second criterion for the UE.

In block 402, the measurement relaxation operation is performed in response to the UE meeting one or more relaxation criteria of the at least one relaxation criterion of the first version.

In an embodiment of the present invention, for detailed introductions of blocks 401-402, reference may be made to relevant introductions of blocks 201-202 in the foregoing embodiments, and details are not repeated here in this embodiment of the present invention.

It should be noted that, in an embodiment of the present invention, when performing the measurement relaxation operation, a relaxation level of the measurement relaxation operation performed in the case where the cell to be measured is the high priority inter-frequency cell is the same as or greater than the relaxation level of the measurement relaxation operation performed in the case where the cell to be measured is the intra-frequency cell, the equal priority inter-frequency cell, or the low priority inter-frequency cell (for example, stopping the measurement for a longer duration and/or using a greater expansion coefficient).

Therefore, with the measurement relaxation method and apparatus/storage medium/device provided in the embodiments of the present invention, the UE can obtain the at least one relaxation criterion of the first version configured by the network device, and perform the measurement relaxation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

FIG. 5 is a flowchart of a measurement relaxation method provided by a further embodiment of the present invention. The method is performed by the UE. As shown in FIG. 5, the measurement relaxation method includes the following steps.

In block 501, the first criterion configured by the network device is obtained.

That is, in this embodiment, the network device configures the first criterion for the UE.

In block 502, the measurement relaxation operation is performed in response to the UE meeting one or more relaxation criteria of the at least one relaxation criterion of the first version.

In an embodiment of the present invention, for detailed introductions of blocks 501-502, reference may be made to relevant introductions of blocks 301-302 in the foregoing embodiments, and details are not repeated here in this embodiment of the present invention.

Therefore, with the measurement relaxation method and apparatus/storage medium/device provided in the embodiments of the present invention, the UE can obtain the at least one relaxation criterion of the first version configured by the network device, and perform the measurement relaxation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

FIG. 6 is a flowchart of a measurement relaxation method provided by a further embodiment of the present invention. The method is performed by the UE, which is located in the cell center, and the cell to be measured is the high priority inter-frequency cell. As shown in FIG. 6, the measurement relaxation method includes the following steps.

In block 601, the first criterion and the second criterion configured by the network device are obtained.

That is, in this embodiment, the network device configures both the first criterion and the second criterion for the UE.

In block 602, the measurement relaxation operation is performed in response to the UE meeting one or more relaxation criteria of the at least one relaxation criterion of the first version.

It should be noted that, in an embodiment of the present invention, when the UE is in the cell center and the cell to be measured is the high priority inter-frequency cell, the network device may further configure a second indication message for the UE, the second indication message is used to indicate whether the UE located in the cell center performs the measurement relaxation operation for the high priority inter-frequency cell. In an embodiment of the present invention, the second indication message may include a second bearer field, and the second bearer field is used to carry a second indication value. When the second indication value is a third value, the second indication message is used to indicate that the UE located in the cell center performs the measurement relaxation operation for the high priority inter-frequency cell. When the first indication value is a fourth value, the second indication message is used to indicate that the UE located in the cell center does not perform the measurement relaxation operation according to the relaxation criterion of the first version for the high priority inter-frequency cell.

In an embodiment of the present invention, the second indication message may be, for example, an RRC message, the second bearer field may be, for example, highPriorityMeasRelax, the third value may be, for example, true, and the fourth value may be, for example, false.

On this basis, in an embodiment of the present invention, "performing the measurement relaxation operation in response to the UE meeting one or more relaxation criteria of the at least one relaxation criterion of the first version" as described above may include the following specific steps.

In response to the UE meeting the first criterion and the second criterion, it is determined whether the UE has received the second indication message sent by the network device, and it is determined whether the UE meets a third preset condition or a fourth preset condition. When the UE meets the third preset condition, the UE performs a third measurement relaxation operation: stopping the measurement for a third preset duration, where the third preset duration may be for example X3 h (X3 > 1). When the UE meets the fourth preset condition, the UE does not perform the measurement relaxation operation according to the relaxation criterion of the first version.

In an embodiment of the present invention, the third preset condition includes: the second indication message being received by the UE, where the second indication message includes a second bearer field, and a second indication value carried by the second bearer field is a third value.

The fourth preset condition includes: the second indication message being received by the UE, where the second indication message includes the second bearer field, and the second indication value carried by the second bearer field is a fourth value.

For example, in an embodiment of the present invention, it is assumed that the network device configures the first criterion and the second criterion for the UE, and the UE meets the first criterion and the second criterion. At this time, if it is determined that the UE receives the second indication message, the second indication message includes the second bearer field, and the second indication value carried by the second bearer field is the third value, then it is determined that the third measurement relaxation operation is performed, for example, stopping the measurement for 3 h; if it is determined that the UE has not received the second indication message, then it is determined not to perform the measurement relaxation operation according to the relaxation criterion of the first version.

In another embodiment of the present invention, "performing the measurement relaxation operation in response to the UE meeting one or more relaxation criteria of the at least one relaxation criterion of the first version" as described above may include the following specific steps.

In response to the UE meeting the first criterion and the second criterion, it is determined whether the UE meets a fifth preset condition or a sixth preset condition. When the UE meets the fifth preset condition, the UE performs a third measurement relaxation operation: stopping the measurement for a third preset duration, where the third preset duration may be for example X3 h (X3 > 1). When the UE meets the sixth preset condition, the UE does not perform the measurement relaxation operation according to the relaxation criterion of the first version.

In an embodiment of the present invention, the fifth preset condition includes: the second indication message being received by the UE, where the second indication message includes a second bearer field, and a second indication value is carried by the second bearer field.

Further, in an embodiment of the present invention, the sixth preset condition includes at least one of the following: the second indication message being not received by the UE; the second indication message being received by the UE, where the second indication message does not include the second bearer field.

Further, in an embodiment of the present invention, in response to the UE meeting the first criterion, it is determined whether the UE has received the first indication message sent by the network device (detailed introduction of the first indication message may refer to the above embodiments), and it is determined whether the UE meets the first preset condition or the second preset condition (detailed introduction of the first preset condition or the second preset condition may refer to the above embodiments). When the UE meets the second preset condition, the UE does not perform the measurement relaxation operation according to the relaxation criterion of the first version. When the UE meets the first preset condition, it is further determined whether the UE has received the second indication message sent by the network device, and the measurement relaxation operation is performed according to the second indication message.

Specifically, in an embodiment of the present invention, the measurement relaxation operation is performed according to the second indication message as follows. It is determined whether the UE meets the fifth preset condition or the sixth preset condition. When the UE meets the fifth preset condition, the UE performs a fourth measurement relaxation operation: stopping the measurement for a fourth preset duration, where the fourth preset duration may be for example X4 h (X4 ≤ X3); and/or relaxing the measurement interval with an expansion coefficient K2 (K2>3). When the UE meets the sixth preset condition, the UE does not perform the measurement relaxation operation according to the relaxation criterion of the first version.

In an embodiment of the present invention, the fifth preset condition includes: the second indication message being received by the UE, where the second indication message includes the second bearer field, and the second indication value is carried by the second bearer field.

Further, in an embodiment of the present invention, the sixth preset condition includes at least one of the following: the second indication message being not received by the UE; the second indication message being received by the UE, where the second indication message does not include the second bearer field.

For example, in an embodiment of the present invention, it is assumed that the network device configures the first criterion and the second criterion for the UE, and the UE meets the first criterion. At this time, if it is determined that the UE does not receive the first indication message but receives the second indication message, the second indication message includes the second bearer field, and the second indication value is carried by the second bearer field, then it is determined that the fourth measurement relaxation operation is performed, for example, stopping the measurement for 1 h; if it is determined that the UE has not received the first indication message and the second indication message, then it is determined not to perform the measurement relaxation operation according to the relaxation criterion of the first version.

In another embodiment of the present invention, the measurement relaxation operation is performed according to the second indication message as follows. It is determined whether the UE meets the third preset condition or the fourth preset condition. When the UE meets the third preset condition, the UE performs the fourth measurement relaxation operation: stopping the measurement for the fourth preset duration, where the fourth preset duration may be for example X4 h (X4 ≤ X3); and/or relaxing the measurement interval with the expansion coefficient K2 (K2>3). When the UE meets the fourth preset condition, the UE does not perform the measurement relaxation operation according to the relaxation criterion of the first version.

In an embodiment of the present invention, the third preset condition includes: the second indication message being received by the UE, where the second indication message includes a second bearer field, and a second indication value carried by the second bearer field is the third value.

The fourth preset condition includes: the second indication message being received by the UE, where the second indication message includes the second bearer field, and the second indication value carried by the second bearer field is the fourth value.

Therefore, with the measurement relaxation method and apparatus/storage medium/device provided in the embodiments of the present invention, the UE can obtain the at least one relaxation criterion of the first version configured by the network device, and perform the measurement relaxation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

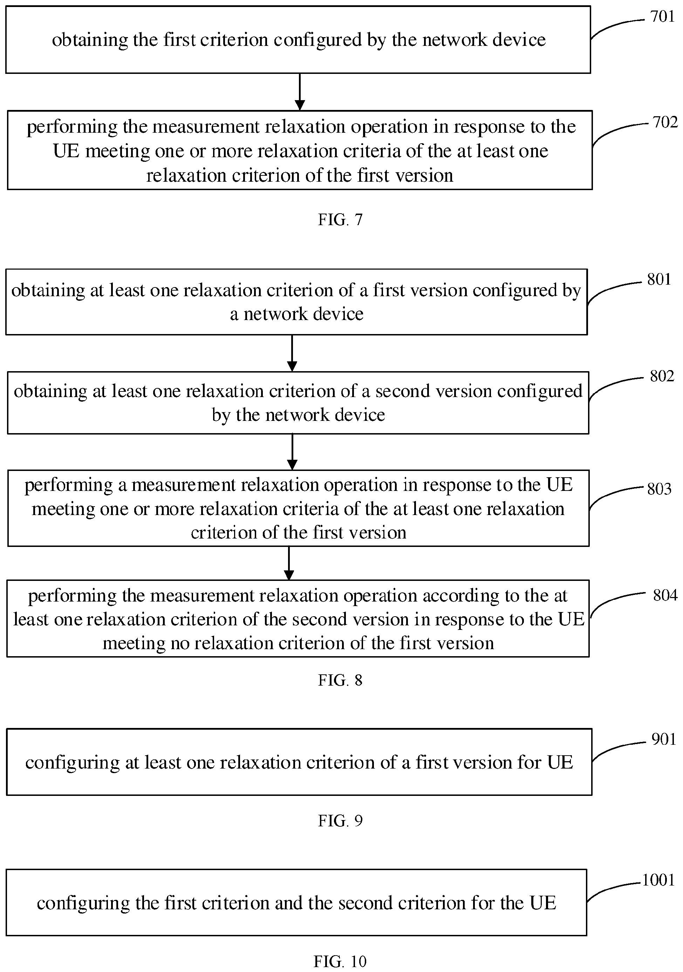

FIG. 7 is a flowchart of a measurement relaxation method provided by a further embodiment of the present invention. The method is performed by the UE, which is located in the cell center, and the cell to be measured is the high priority inter-frequency cell. As shown in FIG. 7, the measurement relaxation method includes the following steps.

In block 701, the first criterion configured by the network device is obtained.

That is, in this embodiment, the network device configures the first criterion for the UE.

In block 702, the measurement relaxation operation is performed in response to the UE meeting one or more relaxation criteria of the at least one relaxation criterion of the first version.

In an embodiment of the present invention, in response to the UE meeting the first criterion, it is determined whether the UE has received the second indication message sent by the network device and it is determined whether the UE meets the fifth preset condition or the sixth preset condition. When the UE meets the fifth preset condition, the UE performs the fourth measurement relaxation operation: stopping the measurement for the fourth preset duration, where the fourth preset duration may be for example X4 h (X4 ≤ X3); and/or relaxing the measurement interval with the expansion coefficient K2 (K2>3). When the UE meets the sixth preset condition, the UE does not perform the measurement relaxation operation according to the relaxation criterion of the first version.

In an embodiment of the present invention, the fifth preset condition includes: the second indication message being received by the UE, where the second indication message includes a second bearer field, and a second indication value is carried by the second bearer field.

Further, in an embodiment of the present invention, the sixth preset condition includes at least one of the following: the second indication message being not received by the UE; the second indication message being received by the UE, where the second indication message does not include the second bearer field.

For example, in an embodiment of the present invention, it is assumed that the network device configures the first criterion for the UE, and the UE meets the first criterion. At this time, if it is determined that the UE receives the second indication message, the second indication message includes the second bearer field, and the second indication value is carried by the second bearer field, then it is determined that the fourth measurement relaxation operation is performed, for example, stopping the measurement for 1 h; if it is determined that the UE has not received the second indication message, then it is determined that the UE does not perform the measurement relaxation operation according to the relaxation criterion of the first version.

In another embodiment of the present invention, in response to the UE meeting the first criterion, it is determined whether the UE has received the second indication message sent by the network device and it is determined whether the UE meets the third preset condition or the fourth preset condition. When the UE meets the third preset condition, the UE performs the fourth measurement relaxation operation: stopping the measurement for the fourth preset duration, where the fourth preset duration may be for example X4 h (X4 ≤ X3); and/or relaxing the measurement interval with the expansion coefficient K2 (K2>3). When the UE meets the fourth preset condition, the UE does not perform the measurement relaxation operation according to the relaxation criterion of the first version.

In an embodiment of the present invention, the third preset condition includes: the second indication message being received by the UE, where the second indication message includes a second bearer field, and a second indication value carried by the second bearer field is the third value.

The fourth preset condition includes: the second indication message being received by the UE, where the second indication message includes the second bearer field, and the second indication value carried by the second bearer field is the fourth value.

Therefore, with the measurement relaxation method and apparatus/storage medium/device provided in the embodiments of the present invention, the UE can obtain the at least one relaxation criterion of the first version configured by the network device, and perform the measurement relaxation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

FIG. 8 is a flowchart of a measurement relaxation method provided by a further embodiment of the present invention. The method is performed by the UE. As shown in FIG. 8, the measurement relaxation method includes the following steps.

In block 801, at least one relaxation criterion of the first version configured by the network device is obtained.

In block 802, at least one relaxation criterion of a second version configured by the network device is obtained.

For example, in an mbodiment of the present invention, the second version is earlier than the first version, and the second version may include Release-15 and/or Release-16, and the first version may include Release-17.

In block 803, the measurement relaxation operation is performed in response to the UE meeting one or more relaxation criteria of the at least one relaxation criterion of the first version, otherwise, the measurement relaxation operation is not performed according to the relaxation criterion of the first version.

For other detailed introductions of blocks 801-803, reference may be made to the descriptions of the foregoing embodiments, and details are not repeated here in the embodiments of the present invention.

In block 804, the measurement relaxation operation is performed according to the at least one relaxation criterion of the second version in response to the UE meeting no relaxation criterion of the first version.

That is, in an embodiment of the present invention, when the network device configures at least one relaxation criterion of the first version and at least one relaxed criterion of the second version for the UE, the UE will preferentially perform the determination for the relaxation criterion of the first version. When all the relaxation criteria of the first version are not fulfilled, the determination of the relaxation criterion of the second version is performed.

Therefore, with the measurement relaxation method and apparatus/storage medium/device provided in the embodiments of the present invention, the UE can obtain the at least one relaxation criterion of the first version configured by the network device, and perform the measurement relaxation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

In addition, it should be noted that in the case where the network device configures at least one relaxation criterion of the first version and at least one relaxed criterion of the second version for the UE, the UE may meet both the relaxation criterion of the first version (i.e., Release-17) and the relaxation criterion of the second version (i.e., Release-16). In this case, since the operations of the measurement relaxation methods performed are different for the cases where the relaxation criterions of different versions are fulfilled, the measurement relaxation method corresponding to one version may be selected according to power-saving gain.

Specifically, in an embodiment of the present invention, the following cases may be included.

Case 1: the UE meets a low mobility relaxation criterion of Release-16 and the criterion for a UE to detect stationary mobility of Release-17, and the UE directly uses the measurement relaxation method corresponding to the criterion for a UE to detect stationary mobility of Release-17.

Case 2: the UE meets a not-at-cell-edge relaxation criterion of Release-16 and the criterion for a UE to detect stationary mobility of Release-17. If it is not determined which measurement relaxation method can provide more power-saving gain, it is more likely to select the measurement relaxation method corresponding to the criterion for a UE to detect stationary mobility of Release-17.

Case 3: the UE meets the not-at-cell-edge relaxation criterion and the low mobility relaxation criterion of Release-16 and meets the criterion for a UE to detect stationary mobility of Release-17. If it is not determined which measurement relaxation method can provide more power-saving gain, the measurement relaxation method corresponding to the criterion for a UE to detect stationary mobility of Release-17 is selected.

Case 4: the UE meets the low mobility relaxation criterion of Release-16 and meets the not-at-cell-edge relaxation criterion and the criterion for a UE to detect stationary mobility of Release-17, and the measurement relaxation method corresponding to the criterion for a UE to detect stationary mobility of Release-17 and the measurement relaxation method corresponding to the not-at-cell-edge relaxation criterion are selected.

Case 5: the UE meets the not-at-cell-edge relaxation criterion of Release-16 and meets the not-at-cell-edge relaxation criterion and the criterion for a UE to detect stationary mobility of Release-17, and the measurement relaxation method corresponding to the criterion for a UE to detect stationary mobility of Release-17 and the measurement relaxation method corresponding to the not-at-cell-edge relaxation criterion of Release-17 are selected. The specific reasons are as follows. UEs that do not meet the not-at-cell-edge relaxation criterion of Release-16 may meet the criterion for a UE to detect stationary mobility of Release-17, and the number of UEs that meet the not-at-cell-edge relaxation criterion of Release-16 is greater than the number of UEs that meet the not-at-cell-edge relaxation criterion and the criterion for a UE to detect stationary mobility of Release-17, and thus using the measurement relaxation method corresponding to the criterion for a UE to detect stationary mobility of Release-17 will save more power.

Case 6: the UE meets the not-at-cell-edge relaxation criterion and the low mobility relaxation criterion of Release-16 and meets the not-at-cell-edge relaxation criterion and the criterion for a UE to detect stationary mobility of Release-17, and the measurement relaxation method corresponding to the criterion for a UE to detect stationary mobility of Release-17 and the measurement relaxation method corresponding to the not-at-cell-edge relaxation criterion of Release-17 are selected.

FIG. 9 is a flowchart of a measurement relaxation method provided by a further embodiment of the present invention. The method is performed by a network device. As shown in FIG. 9, the measurement relaxation method includes the following step.

In block 901, at least one relaxation criterion of a first version is configured for a UE.

In an embodiment of the present invention, the aforementioned UE may be a Redcap UE.

In an embodiment of the present invention, the above-mentioned first version may be Release-17.

Further, in an embodiment of the present invention, the at least one relaxation criterion of the first version includes at least one of the following: a first criterion, i.e., a criterion for a UE to detect stationary mobility (for example, stationaryMobilityEvaluation); a second criterion, i.e., a criterion for a UE to detect that it is not at cell edge while stationary (for example, cellEdgeEvaluationWhileStationary).

Therefore, with the measurement relaxation method and apparatus/storage medium/device provided in the embodiments of the present invention, the network device configures the at least one relaxation criterion of the first version for the UE. It can be known that the embodiments of the present invention provide a method for the measurement relaxation of the first version, so that the UE can perform corresponding measurement relaxation based on the first version relaxation criterion configured by the network device, thus reducing power consumption.

FIG. 10 is a flowchart of a measurement relaxation method provided by a further embodiment of the present invention. The method is performed by the network device. As shown in FIG. 10, the measurement relaxation method includes the following step.

In block 1001, the first criterion and the second criterion are configured for the UE.

In an embodiment of the present invention, the network device may send a first indication message to the UE to configure "whether to perform the measurement relaxation operation for the UE in a case where the network device configures the first criterion and the second criterion and the UE meets the first criterion". Specifically, in an embodiment of the present invention, the first indication message is used to indicate whether the UE performs the measurement relaxation operation in the case where the network device configures the first criterion and the second criterion for the UE and the UE meets the first criterion. In an embodiment of the present invention, the first indication message may include a first bearer field, and the first bearer field is used to carry a first indication value. When the first indication value is a first value, the first indication message is used to indicate that the UE is instructed to perform the measurement relaxation operation in the case where the network device configures the first criterion and the second criterion and the UE meets the first criterion. When the first indication value is a second value, the first indication message is used to indicate that the UE is instructed to not perform the measurement relaxation operation according to the relaxation criterion of the first version in the case where the network device configures the first criterion and the second criterion for the UE and the UE meets the first criterion.

In an embodiment of the present invention, the above-mentioned first indication message may be, for example, a radio resource control (RRC) message, the above-mentioned first bearer field may be, for example, IE combineRelaxedMeasCondition-17, and the above-mentioned first value is, for example, false, and the second value may be, for example, true. In addition, it should be noted that in an embodiment of the present invention, combineRelaxedMeasCondition-17 may reuse IE combineRelaxedMeasCondition of a second version, where the second version is earlier than the first version, and the second version may be, for example, Release-15 and/or Release-16.

Further, in an embodiment of the present invention, the network device may further send a second indication message to the UE to configure "whether the UE located in the cell center performs the measurement relaxation operation for the high priority inter-frequency cell". Specifically, in an embodiment of the present invention, the second indication message is used to indicate whether the UE located in the cell center performs the measurement relaxation operation for the high priority inter-frequency cell. In an embodiment of the present invention, the second indication message may include a second bearer field, and the second bearer field is used to carry a second indication value. When the second indication value is a third value, the second indication message is used to indicate that the UE located in the cell center performs the measurement relaxation operation for the high priority inter-frequency cell. When the second indication value is a fourth value, the second indication message is used to indicate that the UE located in the cell center does not perform the measurement relaxation operation according to the relaxation criterion of the first version for the high priority inter-frequency cell.

In an embodiment of the present invention, the second indication message may be, for example, an RRC message, the second bearer field may be, for example, highPriorityMeasRelax, the third value may be, for example, true, and the fourth value may be, for example, false.

Therefore, with the measurement relaxation method and apparatus/storage medium/device provided in the embodiments of the present invention, the network device configures the at least one relaxation criterion of the first version for the UE. It can be known that the embodiments of the present invention provide a method for the measurement relaxation of the first version, so that the UE can perform corresponding measurement relaxation based on the first version relaxation criterion configured by the network device, thus reducing power consumption.

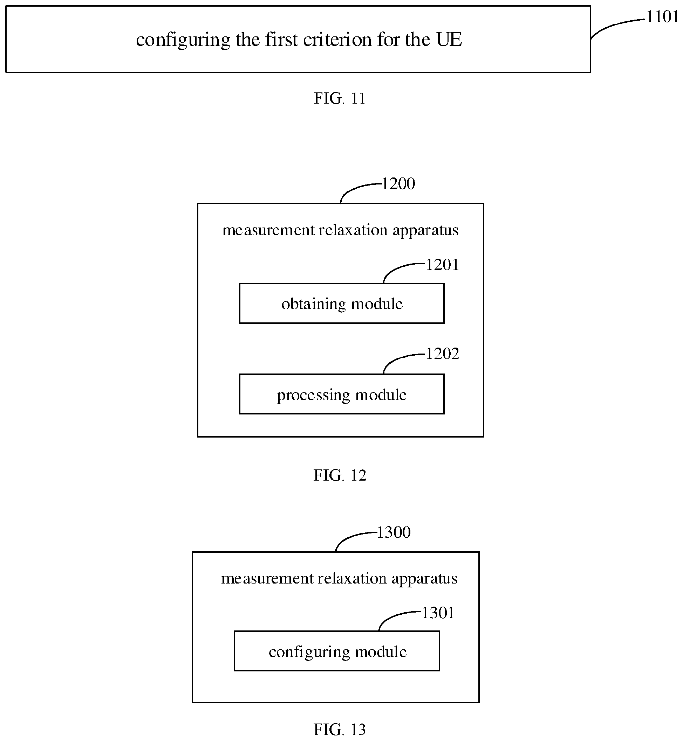

FIG. 11 is a flowchart of a measurement relaxation method provided by a further embodiment of the present invention. The method is performed by the network device. As shown in FIG. 11, the measurement relaxation method includes the following step.

In block 1101, the first criterion is configured for the UE.

Further, in an embodiment of the present invention, the network device may further send the second indication message to the UE to configure "whether the UE located in the cell center performs the measurement relaxation operation for the high priority inter-frequency cell". Specifically, in an embodiment of the present invention, the second indication message is used to indicate whether the UE located in the cell center performs the measurement relaxation operation for the high priority inter-frequency cell. In an embodiment of the present invention, the second indication message may include the second bearer field, and the second bearer field is used to carry the second indication value. When the second indication value is the third value, the second indication message is used to indicate that the UE located in the cell center performs the measurement relaxation operation for the high priority inter-frequency cell. When the second indication value is the fourth value, the second indication message is used to indicate that the UE located in the cell center does not perform the measurement relaxation operation according to the relaxation criterion of the first version for the high priority inter-frequency cell.

In an embodiment of the present invention, the second indication message may be, for example, an RRC message, the second bearer field may be, for example, highPriorityMeasRelax, the third value may be, for example, true, and the fourth value may be, for example, false.

Therefore, with the measurement relaxation method and apparatus/storage medium/device provided in the embodiments of the present invention, the network device configures the at least one relaxation criterion of the first version for the UE. It can be known that the embodiments of the present invention provide a method for the measurement relaxation of the first version, so that the UE can perform corresponding measurement relaxation based on the first version relaxation criterion configured by the network device, thus reducing power consumption.

FIG. 12 is a schematic diagram of a measurement relaxation apparatus provided by an embodiment of the present invention. The apparatus is configured for the UE. As shown in FIG. 12, the apparatus 1200 includes an obtaining module 1201 and a processing module 1202. The obtaining module 1201 is configured to obtain at least one relaxation criterion of a first version configured by a network device. The processing module 1202 is configured to perform a measurement relaxation operation in response to the UE meeting one or more relaxation criteria of the at least one relaxation criterion of the first version.

Therefore, with the measurement relaxation apparatus provided in the embodiments of the present invention, the UE can obtain the at least one relaxation criterion of the first version configured by the network device, and perform the measurement relaxation in response to the UE meeting one or more relaxation criteria of the at least one relaxation criterion of the first version. It can be known that the embodiments of the present invention provide a method for the measurement relaxation of the first version, so that the UE can perform corresponding measurement relaxation based on the first version relaxation criterion configured by the network device, thus reducing power consumption.

In an embodiment of the present invention, the at least one relaxation criterion of the first version includes at least one of the following: a first criterion being a criterion for a UE to detect stationary mobility; a second criterion being a criterion for a UE to detect that it is not at cell edge while stationary.

In a further embodiment of the present invention, the measurement relaxation operation includes at least one of the following: stopping measurement for a preset duration; relaxing a measurement interval with an expansion coefficient.

In a further embodiment of the present invention, the UE is located in a non-cell-center area, and a cell to be measured corresponding to the UE is at least one of the following: an intra-frequency cell of a cell where the UE is located; an equal priority inter-frequency cell of the cell where the UE is located; a low priority inter-frequency cell of the cell where the UE is located; a high priority inter-frequency cell of the cell where the UE is located.

In a further embodiment of the present invention, the obtaining module 1201 is further configured to obtain the first criterion and the second criterion configured by the network device.

In a further embodiment of the present invention, the processing module 1202 is further configured to perform a first measurement relaxation operation by the UE in response to the UE meeting the first criterion and the second criterion.

In a further embodiment of the present invention, the processing module 1202 is further configured to perform a second measurement relaxation operation by the UE in response to the UE meeting the first criterion and the UE meeting a first preset condition, where the first preset condition includes at least one of the following: a first indication message being not received by the UE; the first indication message being received by the UE, where the first indication message includes a first bearer field, and a first indication value carried by the first bearer field is a first value; not perform, according to the relaxation criterion of the first version, the measurement relaxation operation by the UE in response to the UE meeting the first criterion and the UE meeting a second preset condition, where the second preset condition includes: the first indication message being received by the UE, where the first indication message includes the first bearer field, and the first indication value carried by the first bearer field is a second value.

In a further embodiment of the present invention, the obtaining module 1201 is further configured to obtain the first criterion configured by the network device.

In a further embodiment of the present invention, the processing module 1202 is further configured to perform a second measurement relaxation operation by the UE in response to the UE meeting the first criterion.

In a further embodiment of the present invention, relaxation levels of measurement relaxation operations performed for cases where cells to be measured are respectively the intra-frequency cell, the equal priority inter-frequency cell, and the low priority inter-frequency cell, are the same; a relaxation level of the measurement relaxation operation performed for the cell to be measured which is the high priority inter-frequency cell is the same as or greater than the relaxation level of the measurement relaxation operation performed for the cell to be measured which is the intra-frequency cell, the equal priority inter-frequency cell or the low priority inter-frequency cell.

In a further embodiment of the present invention, the UE is located in a cell center, and a cell to be measured corresponding to the UE is a high priority inter-frequency cell of a cell where the UE is located.

In a further embodiment of the present invention, the obtaining module 1201 is further configured to obtain the first criterion and the second criterion configured by the network device.

In a further embodiment of the present invention, the processing module 1202 is further configured to perform a third measurement relaxation operation by the UE in response to the UE meeting the first criterion and the second criterion, and the UE meeting a third preset condition, where the third preset condition includes: a second indication message being received by the UE, where the second indication message includes a second bearer field, and a second indication value carried by the second bearer field is a third value; not perform, according to the relaxation criterion of the first version, the measurement relaxation operation by the UE in response to the UE meeting the first criterion and the second criterion, and the second indication message meeting a fourth preset condition, where the fourth preset condition includes: the second indication message being received by the UE, where the second indication message includes the second bearer field, and the second indication value carried by the second bearer field is a fourth value.

In a further embodiment of the present invention, the processing module 1202 is further configured to perform a third measurement relaxation operation by the UE in response to the UE meeting the first criterion and the second criterion, and the UE meeting a fifth preset condition, where the fifth preset condition includes: a second indication message being received by the UE, where the second indication message includes a second bearer field, and a second indication value is carried by the second bearer field; not perform, according to the relaxation criterion of the first version, the measurement relaxation operation by the UE in response to the UE meeting the first criterion and the second criterion, and the second indication message meeting a sixth preset condition, where the sixth preset condition includes at least one of the following: the second indication message being not received by the UE; the second indication message being received by the UE, where the second indication message does not include the second bearer field.

In a further embodiment of the present invention, the processing module 1202 is further configured to perform, according to a second indication message, the measurement relaxation operation by the UE in response to the UE meeting the first criterion and the UE meeting a first preset condition, where the first preset condition includes at least one of the following: a first indication message being not received by the UE; the first indication message being received by the UE, where the first indication message includes a first bearer field, and a first indication value carried by the first bearer field is a first value; not perform, according to the relaxation criterion of the first version, the measurement relaxation operation by the UE in response to the UE meeting the first criterion and the UE meeting a second preset condition, where the second preset condition includes: the first indication message being received by the UE, where the first indication message includes the first bearer field, and the first indication value carried by the first bearer field is a second value.

In a further embodiment of the present invention, the processing module 1202 is further configured to perform a fourth measurement relaxation operation by the UE in response to the UE meeting a fifth preset condition, where the fifth preset condition includes: the second indication message being received by the UE, where the second indication message includes a second bearer field, and a second indication value is carried by the second bearer field; not perform, according to the relaxation criterion of the first version, the measurement relaxation operation by the UE in response to the UE meeting a sixth preset condition, where the sixth preset condition includes at least one of the following: the second indication message being not received by the UE; the second indication message being received by the UE, where the second indication message does not include the second bearer field.

In a further embodiment of the present invention, the processing module 1202 is further configured to perform a fourth measurement relaxation operation by the UE in response to the UE meeting a third preset condition, where the third preset condition includes: the second indication message being received by the UE, where the second indication message includes a second bearer field, and a second indication value carried by the second bearer field is a third value; not perform, according to the relaxation criterion of the first version, the measurement relaxation operation by the UE in response to the UE meeting a fourth preset condition, where the fourth preset condition includes: the second indication message being received by the UE, where the second indication message includes the second bearer field, and the second indication value carried by the second bearer field is a fourth value.

In a further embodiment of the present invention, the obtaining module 1201 is further configured to obtain the first criterion configured by the network device.

In a further embodiment of the present invention, the processing module 1202 is further configured to perform a fourth measurement relaxation operation by the UE in response to the UE meeting the first criterion, and the UE meeting a fifth preset condition, where the fifth preset condition includes: a second indication message being received by the UE, where the second indication message includes a second bearer field, and a second indication value is carried by the second bearer field; not perform, according to the relaxation criterion of the first version, the measurement relaxation operation by the UE in response to the UE meeting the first criterion, and the UE meeting a sixth preset condition, where the sixth preset condition includes at least one of the following: the second indication message being not received by the UE; the second indication message being received by the UE, where the second indication message does not include the second bearer field.

In a further embodiment of the present invention, the processing module 1202 is further configured to perform a fourth measurement relaxation operation by the UE in response to the UE meeting the first criterion, and the UE meeting a third preset condition, where the third preset condition includes: a second indication message being received by the UE, where the second indication message includes a second bearer field, and a second indication value carried by the second bearer field is a third value; not perform, according to the relaxation criterion of the first version, the measurement relaxation operation by the UE in response to the UE meeting the first criterion, and the UE meeting a fourth preset condition, where the fourth preset condition includes: the second indication message being received by the UE, where the second indication message includes the second bearer field, and the second indication value carried by the second bearer field is a fourth value.

In a further embodiment of the present invention, the apparatus is further configured to obtain at least one relaxation criterion of a second version configured by the network device; and perform the measurement relaxation operation according to the at least one relaxation criterion of the second version in response to the UE meeting no relaxation criterion of the first version.

FIG. 13 is a schematic diagram of a measurement relaxation apparatus provided by another embodiment of the present invention. The apparatus is configured for the network device. As shown in FIG. 13, the apparatus 1300 includes a configuring module 1301 configured to configure at least one relaxation criterion of a first version for a user equipment (UE).

Therefore, with the measurement relaxation apparatus provided in the embodiments of the present invention, the network device configures the at least one relaxation criterion of the first version for the UE. It can be known that the embodiments of the present invention provide a method for the measurement relaxation of the first version, so that the UE can perform corresponding measurement relaxation based on the first version relaxation criterion configured by the network device, thus reducing power consumption.

In an embodiment of the present invention, the at least one relaxation criterion of the first version includes at least one of the following: a first criterion being a criterion for a UE to detect stationary mobility; a second criterion being a criterion for a UE to detect that it is not at cell edge while stationary.

In a further embodiment of the present invention, the configuring module 1301 is further configured to configure the first criterion and the second criterion for the UE.

In a further embodiment of the present invention, the apparatus is further configured to send a first indication message to the UE, where the first indication message is used to instruct the UE whether to perform the measurement relaxation operation when the network device configures the first criterion and the second criterion for the UE, and the UE meets the first criterion.

In a further embodiment of the present invention, the configuring module 1301 is further configured to configure the first criterion for the UE.

In a further embodiment of the present invention, the apparatus is further configured to send a second indication message to the UE, where the second indication message is used to indicate whether the UE located in a cell center performs the measurement relaxation operation for a high priority inter-frequency cell.

In a further embodiment of the present invention, the apparatus is further configured to configure at least one relaxation criterion of a second version for the UE, where the second version is earlier than the first version.

In addition, the core idea of the technical solution of the present invention is as follows.

Point 1. According to R17 relaxation criterion (such as criterion for a UE to detect stationary mobility (for example stationaryMobilityEvaluation) and/or criterion for a UE to detect that it is not at cell edge while stationary (for example, cellEdgeEvaluationWhileStationary)) configured by the network, the UE performs a new R17 measurement relaxation method;
a) Manner 1: using an expansion coefficient to relax a measurement interval defined in R15/R16 to a larger measurement time interval;
b) Manner 2: stopping measurement for a duration.

Point 2. Based on Point 1, the network may configure a switch (such as IE combineRelaxedMeasCondition-17) to indicate whether to allow relaxed measurement in a case where the network configures two criteria and the UE meets the stationary criterion.

Point 3. Based on Point 1, the measurement relaxation method may be different for carriers with different priorities, and the network may configure a switch (such as IE highPriorityMeasRelax) to distinguish whether to allow the relaxation of high priority carriers.

Point 4. Based on Point 1, 2, or 3, relaxation measurement operations of the UE in different scenarios may be:
a) Scenario 1: intra-frequency or equal priority/low priority inter-frequency measurement for non-cell-center UE
   i. the network configures stationaryMobilityEvaluation and cellEdgeEvaluationWhileStationary,
      i) when the UE meets the two conditions at the same time,
         a) the UE performs the relaxation of Manner 2, stopping the measurement for X1 hours (X1>1);
      ii) when the UE meets stationaryMobilityEvaluation,
         a) if the terminal is controlled by combineRelaxedMeasCondition-17 (that is, the network introduces such a switch for control and allows the UE to meet the criterion for a UE to detect stationary mobility when the two conditions are configured), if the network does not configure such IE, or the network configures it but it is false, the UE allows the relaxation according to the stationaryMobilityEvaluation criterion:
            ① the UE performs the relaxation of Manner 1, relaxing the measurement interval with an expansion coefficient K1 (K1>3); or
            ② the UE performs the relaxation of Manner 2, stopping the measurement for X2 h (X2≤X1);
         b) if the terminal is not controlled by combineRelaxedMeasCondition-17 (that is, the network does not introduce such a switch, the UE needs to meet the two configuration conditions at the same time to perform the relaxation), or the UE is controlled by combineRelaxedMeasCondition-17 and the network configuration is true, then the UE does not allow the measurement relaxation (i.e. using original measurement requirements);
   ii. the network configures stationaryMobilityEvaluation,
      the UE meets the conditions:
      a) the UE performs the relaxation of Manner 2, stopping the measurement for X2 h (X2≤X1); or
      b) the UE performs the relaxation of Manner 1, relaxing the measurement interval with the expansion coefficient K1 (K1>3);
b) Scenario 2: high priority inter-frequency measurement for non-cell-center UE
   i. it may follow the relaxation method for the intra-frequency/medium and low priority inter-frequency measurement for non-cell-center UE, and the relaxation level may be different (same or more relaxed);
c) Scenario 3: high priority inter-frequency cell center UE
   i. the network configures stationaryMobilityEvaluation and cellEdgeEvaluationWhileStationary,
      i) when the UE meets the two conditions at the same time,
         a) if highPriorityMeasRela is not effective for this case, or highPriorityMeasRelax is effective for this case and the network configuration is true,
            i. the UE performs the relaxation of Manner 2, stopping the measurement for X3 h (X3 > 1);
         b) if highPriorityMeasRelax is effective for this case but the network does not configure highPriorityMeasRelax, or the network configuration is false, the UE does not allow high priority measurement relaxation;
      ii) the UE meets stationaryMobilityEvaluation,
         a) if the UE is controlled by combineRelaxedMeasCondition-17, if the network does not configure this IE or configures it and it is false, the UE allows the relaxation according to the stationaryMobilityEvaluation criterion:
            i. if highPriorityMeasRelax is not effective for this case, or highPriorityMeasRelax is effective for this case and the network configures highPriorityMeasRelax
               ① the UE performs the relaxation of Manner 1, relaxing the measurement interval with the expansion coefficient K2 (K2>3); or
               ② the UE performs the relaxation of Manner 2, stopping the measurement for X4 h (X4≤X3);
            ii. if highPriorityMeasRelax is effective for this case but highPriorityMeasRelax is not configured by the network, the UE is not allowed to relax the high priority measurement;
         b) if the terminal is not controlled by combineRelaxedMeasCondition-17, or the UE is controlled by combineRelaxedMeasCondition-17 but the network configuration is true, the UE is not allowed to relax the measurement;
   ii. when the network configures stationaryMobilityEvaluation and the UE meets the conditions:
      a) if highPriorityMeasRelax is not effective for this case, or highPriorityMeasRelax is effective for this case and the network configures highPriorityMeasRelax,
         ① the UE performs the relaxation of Manner 1, relaxing the measurement interval with the expansion coefficient K2 (K2>3); or
         ② the UE performs the relaxation of Manner 2, stopping the measurement for X4 h (X4≤X3);
      b) If highPriorityMeasRelax is effective for this case but highPriorityMeasRelax is not configured by the network, the UE is not allowed to relax the high priority measurement.

Point 5. Based on Point 1, if the network configures the R16 relaxation criterion at the same time, the UE may perform the following operations:
Manner 1: preferentially performing the determination for the relaxation criterion of R17; when the relaxation criterion of R17 is not fulfilled, the determination of the relaxation criterion of R16 is performed;
Manner 2: performing the determination for the relaxation criterion of R17.

Based on 1 or 5, if the network configures R16 relaxation criterion at the same time, combineRelaxedMeasCondition-17 may reuse IE combineRelaxedMeasCondition of R16.

### Examples

R17 Relaxation measurement

| **Channel condition** | **Frequency** | **NW configures criteria below and when fulfilled** | **Measurement approach (or relaxation)** | **Use case ID** |
|---|---|---|---|---|
| **For inter-frequency/inter-RAT frequency measurement, this part is deduced from RAN4 LS** | | | | |
| | | Stationary criterion (i.e. when NW configures the stationary criterion, and the stationary criterion is fulfilled) | If highPriorityMeasRelax is configured: | A-1 |
| | | | relaxation level 2 | |
| | | | UE may stop high priority inter-frequency/inter-RAT measurements with at most X4 (X4>1) h measurement time interval; or | |
| | | | UE is allowed to perform RRM measurement with a longer interval K2 (K2 > 3) => K2*Thigh_priority_search. | |
| | | | If highPriorityMeasRelax is not configured: | A-2 |
| | | | UE is allowed to perform the RRM measurement with the longer interval K2 (K2 > 3) => K2 *Thigh_priority_search; or not to perform relaxation, perform legacy measurement. | |
| | | While configuring combineRelaxedMeasCondition -17, NW configures the stationary criterion and the not-at-cell-edge criterion, the stationary criterion is fulfilled but the not-at-cell-edge criterion is not fulfilled. | Referring to A-1, A-2 | B-1 |
| Srxlev > SnonIntraSearchP and Squal > SnonIntraSearchQ | Higher priority frequencies | | If highPriorityMeasRelax is not effective for this case, or if highPriorityMeasRelax is configured, | |
| | | | relaxation level 2: | |
| | | | UE may stop high priority inter-frequency/inter-RAT measurements for at most X1 (X1>1 ) h; | |
| | | Stationary criterion and not-at-cell-edge criterion (i.e. when NW configures the stationary criterion and the not-at-cell-edge criterion, and the two criteria are fulfilled, regardless whether combineRelaxedMeasCondition -17 is configured). | or | |
| | | | UE is allowed to perform RRM measurement with a longer interval K, where K (K > 3) => K*Thigh_priority_search. | C |
| | | | If highPriorityMeasRelax is not configured, | |
| | | | the UE is allowed to perform RRM measurement with a longer interval K2 (K2 > 3) => K2 *Thigh_priority_search, | |
| | | | or | |
| | | | not to perform relaxation, perform legacy measurement. | |
| | Equal/ Lower priority frequencies | All scenarios | UE may choose not to perform measurements of NR inter-frequencies or inter-RAT frequency cells. (According to current TS 38.304). | D |
| | | | (i.e. legacy behavior) | |
| | | | TS38.304: | |
| | | | Section 5.2.4.2 (legacy) | |
| Srxlev ≤ SnonIntraSearchP | Higher priority and equal/ Lower priority frequencies | Stationary criterion including: case 1) when NW configures the stationary criterion, and the stationary criterion is fulfilled; case 2) when NW configure both the stationary criterion and the not-at-cell-edge criterion, while combineRelaxedMeasCondition -17 is configured, the stationary criterion is fulfilled and the not-at-cell-edge criterion is not fulfilled. | Relaxation level 1 | E |
| | | | UE may relax more or stop. | |
| | | | Stop can be controlled by a flag. | |
| or | | | | |
| Squal ≤ SnonIntraSearchQ | | | | |
| | | Stationary criterion and the not-at-cell-edge criterion (i.e. when NW configures the stationary criterion and the not-at-cell-edge criterion, and the two criteria are fulfilled, regardless whether combineRelaxedMeasCondition -17 is configured). | Relaxation level 2 | F |
| | | | UE may relax more or stop. | |
| | | | Stop can be controlled by a flag. | |

| **For intra-frequency measurement, this part is deduced from RAN2/RAN4 conclusion** | | | | |
|---|---|---|---|---|
| SrxleV > S_{IntraSearchP} | N/A | All scenarios | UE may choose not to perform intra-frequency measurements. (According to current TS 38.304) (i.e. legacy behavior) | H |
| and | | | | |
| Squal > S_{IntraSearchQ} | | | TS38.304: Section 5.2.4.2 (legacy) | |
| SrxleV ≤ S_{IntraSearchP} | N/A | Stationary criterion including: case 1) when NW configures the stationary criterion, and the stationary criterion is fulfilled; case 2) when NW configure both the stationary criterion and the not-at-cell-edge criterion, while combineRelaxedMeasCondition -17 is configured, the stationary criterion is fulfilled and the not-at-cell-edge criterion is not fulfilled. | Relaxation level 1 | I |
| | | | UE may relax more or stop. | |
| | | | Stop can be controlled by a flag. | |
| or | | | | |
| Squal ≤ SintraSearchQ | | | | |
| | N/A | Stationary criterion and the not-at-cell-edge criterion (i.e. when NW configures the stationary criterion and the not-at-cell-edge criterion, and the two criteria are fulfilled, regardless whether combineRelaxedMeasCondition -17 is configured). | Relaxation level 2 | J |
| | | | UE may relax more or stop. | |
| | | | Stop can be controlled by a flag. | |

R16 and R17 configurations

| | R16 criterion fulfilled | R17 criterion fulfilled | RRM relaxation method which can provide more power saving gain is selected | |
|---|---|---|---|---|
| Case 1 | low mobility criterion | stationary criterion | R17 RRM relaxation method corresponding to R17 stationary criterion | |
| | | | UE should apply the R17 RRM relaxation method. | |
| Case 2 | not-at-cell-edge criterion | stationary criterion | FFS, not sure which relaxation method can provide more power saving gain | |
| | | | more likely to select the R17 method | |
| Case 3 | low mobility and not-at-cell-edge criteria | stationary criterion | FFS, not sure which relaxation method can provide more power saving gain | |
| | | | It is also common understanding that the R17 RRM relaxation method corresponding to R17 stationary criterion can provide more power saving gain than the RRM relaxation method corresponding to R16 low mobility criterion. | |
| | | | But is it hard to tell which of the following RRM relaxation methods can provide more power saving gain: | |
| | | | | R17 RRM relaxation method corresponding to R17 stationary criterion |
| | | | | R16 RRM relaxation method corresponding to low mobility and not-at-cell-edge criteria |
| | | | The R17 measurement relaxation method is selected to be used. | |
| Case 4 | low mobility criterion | stationary and not-at-cell-edge criteria | R17 RRM relaxation method corresponding to both R17 stationary and not-at-cell-edge criteria | |
| | | | Using the R17 method | |
| Case 5 | not-at-cell-edge criterion | stationary and not-at-cell-edge criteria | FFS, not sure which relaxation method can provide more power saving gain | |
| | | | It is reasonable to allow looser R17 not-at-cell-edge criterion than Rel-16 to allow more stationary UEs (which do not meet the R16 not-at-cell-edge criterion) to perform RRM relaxation. | |
| | | | Using the R17 method | |
| Case 6 | low mobility and not-at-cell-edge criteria | stationary and not-at-cell-edge criteria | FFS, not sure which relaxation method can provide more power saving gain | |
| | | | Similar as case 5, using the R17 method. | |

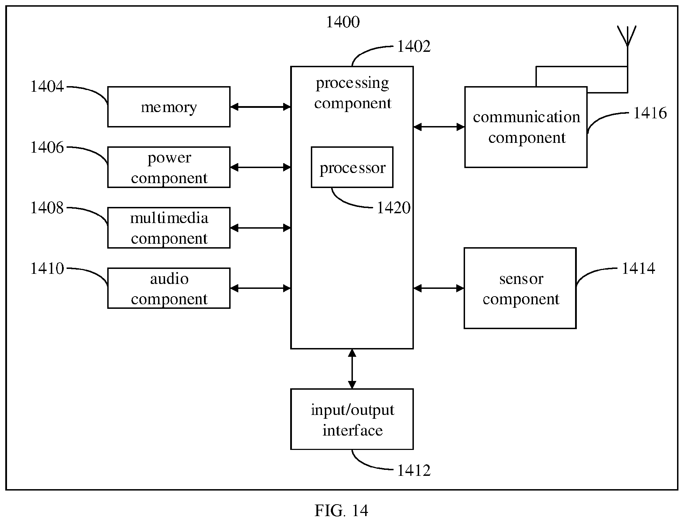

FIG. 14 is a block diagram of a UE 1400 provided by an embodiment of the present invention. For example, the UE 1400 may be a mobile phone, a computer, a digital broadcast terminal device, a messaging device, a game console, a tablet device, a medical device, a fitness device, a personal digital assistant, or the like.

Referring to FIG. 14, the UE 1400 may include at least one of the following components: a processing component 1402, a memory 1404, a power component 1406, a multimedia component 1408, an audio component 1410, an input/output (I/O) interface 1412, a sensor component 1413, and a communication component 1416.

The processing component 1402 typically controls overall operations of the UE 1400, such as the operations associated with display, phone calls, data communications, camera operations, and recording operations. The processing component 1402 may include at least one processors 1420 to execute instructions to perform all or some of the steps in the above-described methods. Moreover, the processing component 1402 may include at least one module which facilitates the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the UE 1400. Examples of such data include instructions for any applications or methods operated on the UE 1400, contact data, phonebook data, messages, pictures, videos, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the UE 1400. The power component 1406 may include a power management system, at least one power source, and any other components associated with the generation, management, and distribution of power in the UE 1400.

The multimedia component 1408 includes a screen providing an output interface between the UE 1400 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a wake-up time and a pressure associated with the touch or swipe action. In some embodiments, the multimedia component 1408 includes a front camera and/or a rear camera. The front camera and/or the rear camera may receive an external multimedia datum while the UE 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone (MIC) configured to receive an external audio signal when the UE 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 1402 and peripheral interface modules, such as keyboards, click wheels, buttons, and the like. The buttons may include, but are not limited to, a home button, a volume button, a starting button, and a locking button.

The sensor component 1413 includes at least one sensor to provide status assessments of various aspects of the UE 1400. For instance, the sensor component 1413 may detect an open/closed status of the equipment 1400, relative positioning of components, e.g., the display and the keypad, of the UE 1400. The sensor component 1413 may also detect a change in position of the UE 1400 or a component of the UE 1400, a presence or absence of user contact with the UE 1400, an orientation or an acceleration/deceleration of the UE 1400, and a change in temperature of the UE 1400. The sensor component 1413 may include a proximity sensor configured to detect the presence of nearby objects without any physical contact. The sensor component 1413 may further include a light sensor, such as a CMOS or CCD image sensor, for use in imaging applications. In some embodiments, the sensor component 1413 may further include an accelerometer sensor, a gyroscope sensor, a magnetic sensor, a pressure sensor, or a temperature sensor.

The communication component 1416 is configured to facilitate communication, wired or wireless, between the UE 1400 and other devices. The UE 1400 can access a wireless network based on a communication standard, such as Wi-Fi, 2G, or 3G, or a combination thereof. In an illustrative embodiment, the communication component 1416 receives a broadcast signal or broadcast associated information from an external broadcast management system via a broadcast channel. In an illustrative embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1400 may be implemented with at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

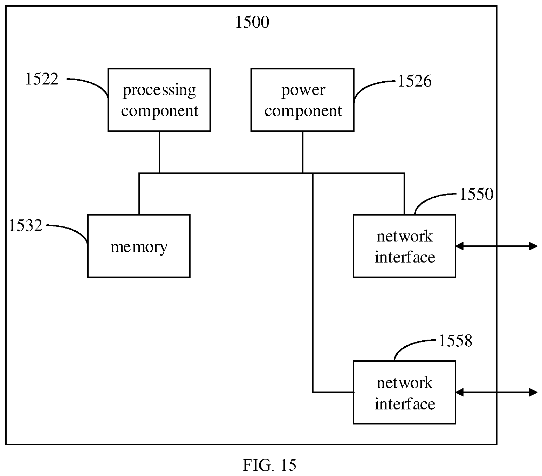

FIG. 15 is a block diagram of a base station 1500 provided by an embodiment of the present invention. For example, the base station 1500 may be provided as a network device. Referring to FIG. 15, the base station 1500 includes a processing component 1511, which further includes at least one of processors, and a memory resource represented by a memory 1532 configured to store instructions executable by the processing component 1522, such as application programs. The application programs stored in the memory 1532 may include one or more modules each corresponding to a set of instructions. In addition, a processing component 1517 is configured to execute instructions to perform any of the foregoing methods performed by the base station, for example, the method as shown in FIG. 1.

The base station 1500 may also include a power component 1517 configured to perform the power management of the base station 1500, a wired or wireless network interfaces 1550 configured to connect the base station 1500 to a network, and an input/output (I/O) interface 1558. The base station 1500 may operate based on an operating system stored in the memory 1532, such as Windows Server TM, Mac OS XTM, Unix TM, Linux TM, Free BSDTM, or the like.

In the above embodiments provided by the present invention, the methods provided in embodiments of the present invention are introduced from perspectives of the base station, the UE and the RIS array respectively. In order to implement the various functions in the methods provided by the above embodiments of the present invention, the base station and the UE may include a hardware structure and a software module, and implement the above functions in a form of the hardware structure, the software module, or the hardware structure plus the software module. One function among the above mentioned functions may be implemented in the form of the hardware structure, the software module, or the hardware structure plus the software module.

Embodiments of the present invention provide a communication apparatus, which may include a transceiving module and a processing module. The transceiving module may include a sending module and/or a receiving module, the sending module is configured to implement a sending function, and the receiving module is configured to implement a receiving function. The transceiving module may implement the sending function and/or the receiving function.

The communication apparatus may be a terminal device (such as the UE in the foregoing method embodiments), may also be an apparatus in the terminal device, and may also be an apparatus that can be used in conjunction with the terminal device. Alternatively, the communication apparatus may be a network device, may also be an apparatus in the network device, and may also be an apparatus that can be used in conjunction with the network device.

Embodiments of the present invention provide a communication device, which may be a network device, may also be a terminal device (such as the UE in the foregoing method embodiments), may also be a chip, a chip system, or a processor that supports the network device to implement the above methods, and may also be a chip, a chip system, or a processor that supports the terminal device to implement the above methods. The device may be configured to implement the methods as described in the above method embodiments, and for details, reference may be made to the descriptions in the above method embodiments.

The communications device may include one or more processors. The processor may be a general-purpose processor or a special-purpose processor. For example, it may be a baseband processor or a central processing unit. The baseband processor may be configured to process a communication protocol and communication data, and the central processing unit may be configured to control a communication device (such as a network device, a baseband chip, a terminal device, a terminal device chip, a DU or a CU, etc.), execute computer programs, and process data of the computer programs.

Optionally, the communication device may further include one or more memories having stored therein a computer program. The processor executes the computer program, to cause the communication device to implement the methods as described in the above method embodiments. Optionally, the memory may have stored therein data. The communication device and the memory may be provided separately or integrated together.

Optionally, the communication device may further include a transceiver and an antenna. The transceiver may be called a transceiving element, a transceiving machine, a transceiving circuit or the like, for implementing a transceiving function. The transceiver may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device may further include one or more interface circuits. The interface circuit is configured to receive code instructions and transmit the code instructions to the processor. The processor runs the code instructions to enable the communication device to execute the methods as described in the above method embodiments.

The communication device is a terminal device (such as the UE in the foregoing method embodiments). The processor is configured to execute the method shown in any one of FIGS. 1 to 9.

The communication device is a network device. The transceiver is configured to execute the method shown in any one of FIGS. 10 to 13.

In an implementation, the processor may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor may have stored therein a computer program that, when run on the processor, causes the communication device to implement the methods as described in the above method embodiments. The computer program may be embedded in the processor, and in this case, the processor may be implemented by a hardware.

In an implementation, the communication device may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an N-type metal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the UE in the foregoing method embodiments), but the scope of the communication device described in the present invention is not limited thereto, and the structure of the communication device may not be limited thereto. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, the chip includes a processor and an interface. In the chip, one or more processors may be provided, and more than one interface may be provided.

Optionally, the chip further includes a memory for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present invention.

Embodiments of the present invention also provide a system for determining a duration of a side link. The system includes the communication apparatus as the terminal device (such as the first terminal device in the foregoing method embodiments) and the communication apparatus as the network device as described in the foregoing embodiments, or the system includes the communication device as the terminal device (such as the first terminal device in the foregoing method embodiments) and the communication device as the network device as described in the foregoing embodiments.

The present invention further provides a readable storage medium having stored thereon instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are distinguished for convenience of description, and are not intended to limit the scope of embodiments of the present invention, and nor are they intended to represent sequential order.

The term "at least one" used in the present invention may also be described as one or more, and the term "a plurality of" may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention be limited by the appended claims.

## Claims

1. A measurement relaxation method, performed by a user equipment (UE), comprising:
obtaining at least one relaxation criterion of a first version configured by a network device; and
performing a measurement relaxation operation in response to the UE meeting one or more relaxation criteria of the at least one relaxation criterion of the first version.

2. The method according to claim 1, wherein the at least one relaxation criterion of the first version comprises at least one of the following:
a first criterion being a criterion for a UE to detect stationary mobility;
a second criterion being a criterion for a UE to detect that it is not at cell edge while stationary.

3. The method according to claim 2, wherein the measurement relaxation operation comprises at least one of the following:
stopping measurement for a preset duration;
relaxing a measurement interval with an expansion coefficient.

4. The method according to claim 3, wherein the UE is located in a non-cell-center area, and a cell to be measured corresponding to the UE is at least one of the following:
an intra-frequency cell of a cell where the UE is located;
an equal priority inter-frequency cell of the cell where the UE is located;
a low priority inter-frequency cell of the cell where the UE is located;
a high priority inter-frequency cell of the cell where the UE is located.

5. The method according to claim 4, wherein obtaining the at least one relaxation criterion of the first version configured by the network device comprises:
obtaining the first criterion and the second criterion configured by the network device.

6. The method according to claim 5, wherein performing the measurement relaxation operation in response to the UE meeting one or more relaxation criteria of the at least one relaxation criterion of the first version comprises:
performing a first measurement relaxation operation by the UE in response to the UE meeting the first criterion and the second criterion.

7. The method according to claim 6, wherein performing the measurement relaxation operation in response to the UE meeting one or more relaxation criteria of the at least one relaxation criterion of the first version comprises:
performing a second measurement relaxation operation by the UE in response to the UE meeting the first criterion and the UE meeting a first preset condition, wherein the first preset condition comprises at least one of the following: a first indication message being not received by the UE; the first indication message being received by the UE, wherein the first indication message comprises a first bearer field, and a first indication value carried by the first bearer field is a first value;
not performing, according to the relaxation criterion of the first version, the measurement relaxation operation by the UE in response to the UE meeting the first criterion and the UE meeting a second preset condition, wherein the second preset condition comprises: the first indication message being received by the UE, wherein the first indication message comprises the first bearer field, and the first indication value carried by the first bearer field is a second value.

8. The method according to claim 4, wherein obtaining the at least one relaxation criterion of the first version configured by the network device comprises:
obtaining the first criterion configured by the network device.

9. The method according to claim 8, wherein performing the measurement relaxation operation in response to the UE meeting one or more relaxation criteria of the at least one relaxation criterion of the first version comprises:
performing a second measurement relaxation operation by the UE in response to the UE meeting the first criterion.

10. The method according to any one of claims 4 to 9, wherein relaxation levels of measurement relaxation operations performed for cases where cells to be measured are respectively the intra-frequency cell, the equal priority inter-frequency cell, and the low priority inter-frequency cell, are the same;
a relaxation level of the measurement relaxation operation performed for the cell to be measured which is the high priority inter-frequency cell is the same as or greater than the relaxation level of the measurement relaxation operation performed for the cell to be measured which is the intra-frequency cell, the equal priority inter-frequency cell or the low priority inter-frequency cell.

11. The method according to claim 3, wherein the UE is located in a cell center, and a cell to be measured corresponding to the UE is a high priority inter-frequency cell of a cell where the UE is located.

12. The method according to claim 11, wherein obtaining the at least one relaxation criterion of the first version configured by the network device comprises:
obtaining the first criterion and the second criterion configured by the network device.

13. The method according to claim 12, wherein performing the measurement relaxation operation in response to the UE meeting one or more relaxation criteria of the at least one relaxation criterion of the first version comprises:
performing a third measurement relaxation operation by the UE in response to the UE meeting the first criterion and the second criterion, and the UE meeting a third preset condition, wherein the third preset condition comprises: a second indication message being received by the UE, wherein the second indication message comprises a second bearer field, and a second indication value carried by the second bearer field is a third value;
not performing, according to the relaxation criterion of the first version, the measurement relaxation operation by the UE in response to the UE meeting the first criterion and the second criterion, and the second indication message meeting a fourth preset condition, wherein the fourth preset condition comprises: the second indication message being received by the UE, wherein the second indication message comprises the second bearer field, and the second indication value carried by the second bearer field is a fourth value.

14. The method according to claim 12, wherein performing the measurement relaxation operation in response to the UE meeting one or more relaxation criteria of the at least one relaxation criterion of the first version comprises:
performing a third measurement relaxation operation by the UE in response to the UE meeting the first criterion and the second criterion, and the UE meeting a fifth preset condition, wherein the fifth preset condition comprises: a second indication message being received by the UE, wherein the second indication message comprises a second bearer field, and a second indication value is carried by the second bearer field;
not performing, according to the relaxation criterion of the first version, the measurement relaxation operation by the UE in response to the UE meeting the first criterion and the second criterion, and the second indication message meeting a sixth preset condition, wherein the sixth preset condition comprises at least one of the following: the second indication message being not received by the UE; the second indication message being received by the UE, wherein the second indication message does not comprise the second bearer field.

15. The method according to claim 12, wherein performing the measurement relaxation operation in response to the UE meeting one or more relaxation criteria of the at least one relaxation criterion of the first version comprises:
performing, according to a second indication message, the measurement relaxation operation by the UE in response to the UE meeting the first criterion and the UE meeting a first preset condition, wherein the first preset condition comprises at least one of the following: a first indication message being not received by the UE; the first indication message being received by the UE, wherein the first indication message comprises a first bearer field, and a first indication value carried by the first bearer field is a first value;
not performing, according to the relaxation criterion of the first version, the measurement relaxation operation by the UE in response to the UE meeting the first criterion and the UE meeting a second preset condition, wherein the second preset condition comprises: the first indication message being received by the UE, wherein the first indication message comprises the first bearer field, and the first indication value carried by the first bearer field is a second value.

16. The method according to claim 15, wherein performing, according to the second indication message, the measurement relaxation operation by the UE comprises:
performing a fourth measurement relaxation operation by the UE in response to the UE meeting a fifth preset condition, wherein the fifth preset condition comprises: the second indication message being received by the UE, wherein the second indication message comprises a second bearer field, and a second indication value is carried by the second bearer field;
not performing, according to the relaxation criterion of the first version, the measurement relaxation operation by the UE in response to the UE meeting a sixth preset condition, wherein the sixth preset condition comprises at least one of the following: the second indication message being not received by the UE; the second indication message being received by the UE, wherein the second indication message does not comprise the second bearer field.

17. The method according to claim 15, wherein performing, according to the second indication message, the measurement relaxation operation by the UE comprises:
performing a fourth measurement relaxation operation by the UE in response to the UE meeting a third preset condition, wherein the third preset condition comprises: the second indication message being received by the UE, wherein the second indication message comprises a second bearer field, and a second indication value carried by the second bearer field is a third value;
not performing, according to the relaxation criterion of the first version, the measurement relaxation operation by the UE in response to the UE meeting a fourth preset condition, wherein the fourth preset condition comprises: the second indication message being received by the UE, wherein the second indication message comprises the second bearer field, and the second indication value carried by the second bearer field is a fourth value.

18. The method according to claim 11, wherein obtaining the at least one relaxation criterion of the first version configured by the network device comprises:
obtaining the first criterion configured by the network device.

19. The method according to claim 18, wherein performing the measurement relaxation operation in response to the UE meeting one or more relaxation criteria of the at least one relaxation criterion of the first version comprises:
performing a fourth measurement relaxation operation by the UE in response to the UE meeting the first criterion, and the UE meeting a fifth preset condition, wherein the fifth preset condition comprises: a second indication message being received by the UE, wherein the second indication message comprises a second bearer field, and a second indication value is carried by the second bearer field;
not performing, according to the relaxation criterion of the first version, the measurement relaxation operation by the UE in response to the UE meeting the first criterion, and the UE meeting a sixth preset condition, wherein the sixth preset condition comprises at least one of the following: the second indication message being not received by the UE; the second indication message being received by the UE, wherein the second indication message does not comprise the second bearer field.

20. The method according to claim 18, wherein performing the measurement relaxation operation in response to the UE meeting one or more relaxation criteria of the at least one relaxation criterion of the first version comprises:
performing a fourth measurement relaxation operation by the UE in response to the UE meeting the first criterion, and the UE meeting a third preset condition, wherein the third preset condition comprises: a second indication message being received by the UE, wherein the second indication message comprises a second bearer field, and a second indication value carried by the second bearer field is a third value;
not performing, according to the relaxation criterion of the first version, the measurement relaxation operation by the UE in response to the UE meeting the first criterion, and the UE meeting a fourth preset condition, wherein the fourth preset condition comprises: the second indication message being received by the UE, wherein the second indication message comprises the second bearer field, and the second indication value carried by the second bearer field is a fourth value.

21. The method according to any one of claims 1 to 20, further comprising:
obtaining at least one relaxation criterion of a second version configured by the network device; and
performing the measurement relaxation operation according to the at least one relaxation criterion of the second version in response to the UE meeting no relaxation criterion of the first version.

22. A measurement relaxation method, performed by a network device, comprising:
configuring at least one relaxation criterion of a first version for a user equipment (UE).

23. The method according to claim 22, wherein the at least one relaxation criterion of the first version comprises at least one of the following:
a first criterion being a criterion for a UE to detect stationary mobility;
a second criterion being a criterion for a UE to detect that it is not at cell edge while stationary.

24. The method according to claim 22, wherein configuring the at least one relaxation criterion of the first version for the UE comprises:
configuring the first criterion and the second criterion for the UE.

25. The method according to claim 24, further comprising:
sending a first indication message to the UE, wherein the first indication message is used to instruct the UE whether to perform the measurement relaxation operation when the network device configures the first criterion and the second criterion for the UE, and the UE meets the first criterion.

26. The method according to claim 22, wherein configuring the at least one relaxation criterion of the first version for the UE comprises:
configuring the first criterion for the UE.

27. The method according to claim 22, further comprising:
sending a second indication message to the UE, wherein the second indication message is used to indicate whether the UE located in a cell center performs the measurement relaxation operation for a high priority inter-frequency cell.

28. A measurement relaxation apparatus, comprising:
an obtaining module, configured to obtain at least one relaxation criterion of a first version configured by a network device; and
a processing module, configured to perform a measurement relaxation operation in response to a user equipment (UE) meeting one or more relaxation criteria of the at least one relaxation criterion of the first version.

29. A measurement relaxation apparatus, comprising:
a configuring module, configured to configure at least one relaxation criterion of a first version for a user equipment (UE).

30. A communication device, comprising:
a processor, and
a memory having stored therein a computer program that, when executed by the processor, causes the device to implement the method according to any one of claims 1 to 21.

31. A communication device, comprising:
a processor, and
a memory having stored therein a computer program that, when executed by the processor, causes the device to implement the method according to any one of claims 22 to 27.

32. A communication device, comprising a processor and an interface circuit;
wherein the interface circuit is configured to receive code instructions and transmit the code instructions to the processor; and
the processor is configured to run the code instructions to implement the method according to any one of claims 1 to 21.

33. A communication device, comprising a processor and an interface circuit;
wherein the interface circuit is configured to receive code instructions and transmit the code instructions to the processor; and
the processor is configured to run the code instructions to implement the method according to any one of claims 22 to 27.

34. A computer-readable storage medium having stored therein instructions that, when executed, cause the method according to any one of claims 1 to 21 to be implemented.

35. A computer-readable storage medium having stored therein instructions that, when executed, cause the method according to any one of claims 22 to 27 to be implemented.
